# EUROPÄISCHE PATENTSCHRIFT

(11) **EP 1 890 855 B1**
(45) Veröffentlichungstag und Bekanntmachung des Hinweises auf die Patenterteilung: **22.10.2008**
(21) Anmeldenummer: 06742323.6
(22) Anmeldetag: 12.05.2006
(51) Int. Cl.: B29B 15/12

(54) **VERFAHREN ZUM AUFBRINGEN VON FUNKTIONSZUSATZSTOFFEN, INSBESONDERE EINES HAFTVERMITTLERS AUF EINEN FASERSTOFF SOWIE VERFAHREN ZUM HERSTELLEN EINES FASERVERBUNDWERKSTOFFES**
METHOD FOR APPLYING FUNCTIONAL ADDITIVES, PARTICULARLY AN ADHESION PROMOTER, TO A FIBROUS MATERIAL AND METHOD FOR PRODUCING A FIBER COMPOSITE
PROCEDE POUR APPLIQUER DES ADDITIFS FONCTIONNELS, NOTAMMENT UN PROMOTEUR D'ADHERENCE, SUR UNE MATIERE FIBREUSE ET PROCEDE POUR REALISER UN MATERIAU COMPOSITE RENFORCE

(30) Priorität: 12.05.2005 DE 102005022820
(43) Veröffentlichungstag der Anmeldung: 27.02.2008
(73) Patentinhaber: Fraunhofer-Gesellschaft zur Förderung der angewandten Forschung e.V., 80686 München (DE); Universität Kassel, 34125 Kassel (DE)
(72) Erfinder: THOLE, Volker, 38102 Braunschweig (DE); EBELING, Volker, 38100 Braunschweig (DE); BLEDZKI, Andrzej, K., 34292 Ahnatal (DE); SPECHT, Klaus, 84144 Geisenhausen (DE); VON BUTTLAR, Hans-Bernhard, 37073 Göttingen (DE); HENNE, Dirk, 49406 Barnstorf (DE)
(74) Vertreter: Stornebel, Kai
(86) Internationale Anmeldenummer: PCT/DE2006/000815
(87) Internationale Veröffentlichungsnummer: WO 2006/119752

(56) Entgegenhaltungen:
- WO-A-01/68556
- WO-A-87/00563
- DE-A1- 2 749 530

## Beschreibung

Die Erfindung betrifft ein Verfahren zum Aufbringen von Funktionszusatzstoffen, insbesondere eines Haftvermittlers auf einen Faserstoff, hauptsächlich bei der Herstellung von Faserverbundwerkstoffen mit einer thermoplastischen oder duroplastischen Matrix. Ebenfalls betrifft die Erfindung ein Verfahren zur Herstellung von Faserverbundwerkstoffen mit einem Faserstoff, der mit einem Funktionszusatzstoff, z. B. einem Haftvermittler versehen wurde.

Faserverbundwerkstoffe sind zwei- oder mehrphasige Werkstoffe aus einer Matrix und mindestens einer Bewehrungskomponente, die vorliegend als Fasern oder als Faserstoff ausgebildet ist. Die Fasern werden aus organischen oder anorganischen Werkstoffen hergestellt und werden nachfolgend auch als Faserstoff bezeichnet.

Neben diesen Verstärkungskomponenten oder Faserstoffen können Verbundwerkstoffe Funktionszusatzstoffe enthalten. In der Kunststofftechnik werden Polymerwerkstoffen üblicherweise Funktionszusatzstoffe, sogenannte Additive zugegeben.

Zur Beeinflussung der Verarbeitbarkeit, der Struktur und der Eigenschaften werden daher neben Füll- und Verstärkungsstoffen u.a. Antioxidantien, Lichtschutzmittel, Thermostabilisatoren, Flammschutzmittel, Gleitmittel, Schlagzähigkeitsverbesserer, Flexibilisatoren, Farbmittel wie Pigmente und Farbstoffe, Biostabilisatoren wie pilz- und mikrobentötende Zusatzstoffe, Fungizide, Treibmittel, Nukleierungsmittel, Vernetzungsmittel und Haftvermittler zugegeben. Hierdurch können spezifische Eigenschaften von Verbundwerkstoffen, wie z. B. Feuchtebeständigkeit oder eine geringe Entflammbarkeit gezielt eingestellt werden.

Oftmals handelt es sich bei den Verbundwerkstoffen oder Mehrphasenwerkstoffen um eine Kombination aus Hydrophilen oder polaren Fasern oder Füllstoffen und um hydrophobe bzw. unpolare Polymere, die die eigentliche Matrix bilden. Damit sich die Eigenschaften der Komponenten, nämlich der Faserstoffe und der Polymere, zu einem Verbundwerkstoff ergänzen, müssen die auf dem Verbundwerkstoff wirkenden Belastungen von der Matrix auf die Bewehrung übertragen werden, also von dem Polymer auf die Fasern bzw. den Faserstoff.

Die Anbindung des Faserstoffes und ggf. der Füllstoffe an die Matrix ist daher für die Werkstoffeigenschaften des Verbundwerkstoffes von großer Bedeutung. Die Grenzschicht zwischen den Komponenten, also zwischen dem Faserstoff, den Füllstoffen und dem Polymer, auch als Interphasenbereich bezeichnet, ist eine häufige Schwachstelle. Darüber hinaus sollte eine Diffusion von Medien in den Interphasenbereich vermieden werden, da diese Medien als Trennmittel oder Weichmacher wirken können und chemische Reaktionen an den Oberflächen verursachen bzw. beschleunigen und somit die Verbundeigenschaften stark beeinträchtigen. Zu diesem Zweck werden hauptsächlich nieder- bis hochmolekulare Haftvermittler eingesetzt, die Molekularbrücken im Interphasenbereich zwischen den polaren Zuschlags- bzw. Verstärkungsstoffen und der Matrix bilden.

Die Wirkung der Haftvermittler beruht auf chemischen oder physikalischen Reaktionen organischer Gruppen des Haftvermittlers mit dem Matrixmaterial, während ein meist anorganischer Teil kovalent oder über Wasserstoffbrücken an die OH-Gruppen der Faser- oder Füllstoffoberflächen gebunden wird. Haftvermittler enthalten daher hydrolysierbare Gruppen zur Bindung an den Füll- bzw. Verstärkungsstoff sowie organofunktionale Gruppen im gleichen Molekül.

In diesem Zusammenhang haben die Oberflächenenergien eine große Bedeutung. Ein zweckmäßiger Verbund der Komponenten ist an bestimmte Voraussetzungen gebunden. Zunächst muss die Oberflächenspannung der Faser bzw. des Faserstoffes soweit verringert werden, dass die Oberflächenenergien des Faserstoffes und der Polymermatrix auf einem Niveau liegen. Das ist die Grundlage für eine vollständige Benetzung der Faser durch den Haftvermittler. Anschließend kann es zu einer chemischen Kopplung zwischen dem Haftvermittler und der Faser bzw. nebenvalenten Bindungen zwischen dem Haftvermittler und der Matrix kommen. Zur Optimierung der Verbundqualitäten müssen die Haftvermittler den Verbundkomponenten entsprechend angepasst sein.

Grundsätzlich werden je nach Polymertyp, das heißt duroplastischer (vernetzender) und thermoplastischer Polymermatrix, aufgrund der unterschiedlichen Verarbeitungsweisen unterschiedlicher Haftvermittlersysteme sowie unterschiedlicher Haftvermittlerreaktionsmechanismen eingesetzt.

Duroplastische Matrizen weisen üblicherweise eine höhere Polarität und daher ein besseres Benetzungsverhalten als Thermoplaste auf, wodurch nur geringere Kennwertsteigerungen durch einen Haftvermittler bei Duroplasten zu erwarten sind. Als Haftvermittler werden hauptsächlich bifunktionelle Silane und Titanate für faserverstärkte Reaktionsharz-Kunststoffe/Duroplaste und organofunktionalisierte Polymere für thermoplastische Verbundwerkstoffe eingesetzt.

Typische Haftvermittler sind z. B. vinylfunktionalisierte Silane, methacrylfunktionalisierte Silane, azidfunktionalisierte Silane, Aminosilane, Titanate, Isocyanate, acrysäuregepfropfte Polyolefine sowie maleinsäureanhydridgepfropfte Polyolefine.

Neben dem Matrixmaterial und der Verarbeitungsverfahren sind bei cellulosischen Naturfasern vor allem der Fasertyp und die Faserstruktur, Oberflächenenergien, Oberflächentopographien sowie die Faserlängenverteilung bzw. Faserlängen-Dicken-Verhältnis und die Faserorientierung im Verbund von signifikanter Bedeutung.

In der Gruppe der cellulosefaserverstärkten Thermoplaste werden aufgrund der relativ geringen Zersetzungstemperatur der Fasern überwiegend PP, PE, PS und PVC als Matrixwerkstoffe eingesetzt, dabei haben sich vor allem maleinsäureanhydridgepfropfte Polyolefine, z. B. MAH-PP als sehr effektiv erwiesen.

In der DE 31 50 547 A1 wird zur Verbesserung der Verträglichkeit mit einem Thermoplast oder der Haftung an einem Thermoplast auf die Verwendung von Silane hingewiesen. Die dort beschriebene Anwendung der Silane liefert jedoch nur ein Haftniveau, das wenig über dem der unbehandelten Naturfaser liegt. Eine effektive Erhöhung der mechanischen Eigenschaften konnte nicht nachgewiesen werden.

Ein Haftvermittler bewirkt neben den mechanischen Kennwertsteigerungen auch eine Verminderung der Wasseraufnahmefähigkeit, also eine Hydrophobierung. Die bessere Benetzbarkeit der Fasern mit der Matrix durch den Haftvermittler bewirkt ebenfalls bessere Gleiteigenschaften bzw. eine geringere Viskosität des plastifizierten Gemisches aus Fasern und Matrix während der Verarbeitung und damit eine verbesserte Dispersion der Fasern im Verbund. Auch eine erhöhte Beständigkeit gegen Umwelteinflüsse, wie z. B. Medien, Temperatur oder UV-Strahlung wird durch die Faserbenetzung bzw. die Faserummantelung durch den Haftvermittler bewirkt.

Die Handhabung der Haftvermittler bedarf oftmals großer Sorgfalt.

Es handelt sich bei diesen Stoffen um reaktives Material, das zum Teil feuchteempfindliche oder temperaturempfindliche Eigenschaften besitzt. In diesen Fällen müssen besondere Vorsichtsmaßnahmen eingehalten werden.

Naturfaserverstärkte Kunststoffe sind aufgrund der oft geringeren Faser- bzw. Verbundkosten für Anwendungen insbesondere in der Automobil-, Bau- oder Möbelindustrie von großer Bedeutung. Die Verwendung der teilweise sehr teuren Haftvermittler verhindert oftmals aus Kostengründen die Umsetzung in Bauteilen. Ferner sind zur Applikation von Haftvermittlern aber auch anderer Funktionszusatzstoffe (Additive) oftmals zusätzliche Prozesse notwendig, so dass Kosten bei der Herstellung der Stoffgemische oder deren Verarbeitung die Folge sind.

Die Wirkung der Haftvermittler ist mehrfach beschrieben worden, beispielsweise wird in der DE 198 52 029 A1 ein Verfahren zur Herstellung von Verbundwerkstoffen mit einer Matrix aus natürlichen Polymeren und Zellstoffasern vorgeschlagen, bei dem zumindest ein Teil der Fasern vor oder während der Verarbeitung zu einem Verbundwerkstoff mit einer Ligninlösung als Haftvermittler behandelt wird. Die Applikationen der Haftvermittler auf dem Faserstoff kann auf unterschiedliche Weise erfolgen. Bei der Direktapplikation wird der Haftvermittler durch Aufsprühen oder Tränken direkt mit den Fasern oder dem Faserstoff vermischt. Der Vorteil hierbei ist, dass der Haftvermittler auf die Faser gebracht wird und dort mit den OH-Gruppen reagieren kann. Da hierbei Lösungsmittel verwendet werden müssen, erfordert die Applikation einen erhöhten Aufwand. Dieses Vorgehen ist daher mit hohen Kosten verbunden und konnte sich nur in wenigen Fällen durchsetzen. Darüber hinaus lässt sich die Bildung von Faseragglomerat nicht verhindern, zudem ist die Mischung zwischen der Matrix und dem Faserstoff häufig inhomogen.

Aus der DE 35 21 228 A1 ist ein kontinuierliches Verfahren zur Herstellung von Halbzeugen aus faserverstärkten Kunststoffen bekannt, bei dem künstliche, organische oder natürliche Faserstoffe in gebundener Form in eine Tränkzone eingebracht werden.

Der flüssige Kunststoff wird in einem Kreislauf umgewälzt und in mehreren Teilströmen unter einem Druck von 0,1 - 10 bar in eine Tränkzone injiziert, die zur besseren Entlüftung Ultraschall ausgesetzt werden kann.

Eine Alternative besteht darin, eine Primärmischung aus Haftvermittlern und einem Matrixstoff bereitzustellen. Bei der Thermoplastverarbeitung wird bei der Verbundaufbereitung, z. B. bei dem Compoundieren oder der Agglomeration, der Haftvermittler als Mischkomponente neben dem Polymermatrixwerkstoff zugegeben. Auch werden Polymerkomponenten mit zugemischtem Haftvermittler als Granulat angeboten, so dass lediglich die Fasern bei der Verbundherstellung zugeführt werden müssen. Aus der DE 101 12 766 A1 ist ein Verfahren zur Herstellung eines Halbzeuges als Flachsfasern für ein Spritzgießverfahren mittels Pelletierung beschrieben. Während des Vormischens kann ein Haftvermittler zugegeben werden, durch die Vormischung von Naturfaser und Matrix werden Halbzeuge hergestellt, die in Form von rieselfähigen Pellets leicht zu dosieren und einfach einzumischen sind. Die Zumischung der Haftvermittler ergibt sehr homogene Verteilungen beider Komponenten. Der Haftvermittler ist auch in Matrixbereichen anzutreffen, in denen keine Fasern vorliegen. Eine gezielte Zuordnung des Haftvermittlers im Interphasenbereich kann auf diese Art und Weise nicht erfolgen.

Die bisher bekannten Verfahren zum Aufbringen eines Haftvermittlers auf einen Faserstoff erfordern entweder eine kostspielige, lösungsmittelhaltige Silanisierung der Cellulosefasern sowie chemische Prozesse, die zu einer Faserschädigung führen, wirken nicht ausschließlich im Interphasenbereich, fördern die Entstehung von Agglomeraten und erfordern zusätzliche Arbeitsprozesse.

Die DE 27 49 530 A1 beschreibt eine Fluid-Behanldungsvorrichtung für Textilfasermaterial mit einer Rohrführung, und einer Blasleitung in der ein Abschnitt zum Bilden einer Fluid-Behandlungskammer im Durchmesser erweitert ist. Dadurch wird die Strömungsgeschwindigkeit verringert. Die Eintrittsöffnung in die Fluid-Behandlungskammer liegt dabei unterhalb der Austrittsöffnung. Sprühdüsen sind an der Eintrittsöffnung angeordnet, um ein Faserbehandlungsfluid aufzubringen.

Aufgrund der in Strömungsrichtung höhenversetzten Anordnung der Austrittsöffnung zu der Eintrittsöffnung wird alles Behandlungsfluid, das sich am Boden der Behandlungskammer sammelt, fortwährend durch die sich durch den Durchlass bewegende Fasermasse bestrichen, so dass sich zu keinem Zeitpunkt Fluid auf der Fläche sammeln kann. Die Vorrichtung ist als eine Saugrohrvorrichtung mit einem ansaugenden Ventilator hinter der Auslassöffnung ausgebildet.

Aufgabe der Erfindung ist es daher, ein Verfahren bereitzustellen, mit dem ohne die beschriebenen Nachteile bisheriger Verfahren der Funktionszusatzstoff, insbesondere Haftvermittler, unmittelbar auf den Faserstoff aufgebracht werden kann.

Erfindungsgemäß wird diese Aufgabe durch ein Verfahren mit den Merkmalen des Anspruchs 1 gelöst, bei dem der Faserstoff zusammen mit dem Funktionszusatzstoff, insbesondere dem Haftvermittler und/oder eines Teils des polymeren Matrixmaterials in einer Blasleitung mit einer Geschwindigkeit von mehr als 20 m/s und einem Druck oberhalb des Umgebungsdruckes transportiert wird. Durch diese neuartige Art und Weise der Aufbringung bzw. Applikation des Funktionszusatzstoffes , insbesondere Haftvermittlers auf den Faserstoff hat sich überraschenderweise ergeben, dass sich der Funktionszusatzstoff fein verteilt und gleichmäßig auf dem Faserstoff niederschlägt, ohne dass Agglomerate entstehen.

Eine Weiterbildung des Verfahrens sieht vor, dass der Funktionszusatzstoff, z.B. Haftvermittler separat in die Rohrleitung eingeleitet wird, beispielsweise durch eine Düse, so dass der durch die Rohrleitung transportierte Faserstoff auf den Funktionszusatzstoff mit einer hohen Geschwindigkeit auftrifft und eine feine Verteilung des Funktionszusatzstoffes auf dem Faserstoff erfolgt.

Eine Weiterbildung der Erfindung sieht vor, dass in der Rohrleitung ein Temperatur-niveau herrscht, das oberhalb der Umgebungsbedingungen liegt, um eine bessere Feinverteilung zu erzielen und eine Agglomeration zu verhindern.

Grundsätzlich kann der Fasertransport auch in einer reinen kalten oder in einer wasserdampfhaltigen Atmosphäre erfolgen.

Besonders vorteilhaft ist das erfindungsgemäße Verfahren, wenn die Rohstoffe, lignocellulosehaltige Pflanzen, unter Druck, z. B. mittels eines Refiners, aufgeschlossen werden. Die Faserstoffe werden dann aus dem Refiner unmittelbar in die Rohrleitung geleitet, so dass eine externe Druckerzeugung, beispielsweise über einen Hochdruckventilator, entfallen kann.

Darüber hinaus ist vorgesehen, dass eine Applikation mit Funktionszusatzstoffen oder einem Teil der polymeren Matrix direkt mit dem Faseraufschluss oder der Faseraufbereitung kombiniert werden kann, indem der Polymerwerkstoff dem Faserstoff im Refiner unter Druck zugegeben wird. Eine derartige Kombination ist besonders vorteilhaft, da hierdurch die Prozeßkosten erheblich vermindert werden können. Darüber hinaus kann durch die direkte Applikation mit Funktionszusatzstoffen, z.B. einem Haftvermittler, die Menge des Funktionszusatzstoffes auf die im Interphasenbereich notwendige Menge reduziert werden. Eine Überdosierung, wie sie gemäß dem Stand der Technik bei der Zugabe zum Matrixstoff häufig erfolgt, ist nicht möglich oder erforderlich.

Um eine gleichmäßige Verteilung des Funktionszusatzstoffes, z.B. Haftvermittlers, oder einem Teil der polymeren Matrix zu begünstigen, wird dieser in einem wässrigen Medium aufgebracht bzw. in die Rohrleitung eingebracht und mit hoher Geschwindigkeit zusammen mit dem Faserstoff transportiert.

Als Funktionszusatzstoffe werden Antioxidantien, Lichtschutzmittel, Thermostabilisatoren, Flammschutzmittel, Gleitmittel, Schlagzähigkeitsverbesserer, Flexibilisatoren, Farbmittel wie Pigmente und Farbstoffe, Biostabilisatoren wie pilz- und mikrobentötende Zusatzstoffe, Fungizide, Treibmittel, Nukleierungsmittel, Weichmacher, Vernetzungsmittel und Haftvermittler verwendet. Als polymeres Matrixmaterial werden Thermoplaste, hauptsächlich PP, PE, PVC, PS, ABS oder PA, Duroplaste oder Elastomere zur Benetzung des Faserstoffes verwendet, wobei der Faserstoff vorzugsweise aus einem lignocellulosehaltigen Faserstoff besteht. Lignocelluloshaltige Pflanzen, wie Holz, Stroh oder Faserpflanzen müssen vor der Weiterverarbeitung mit polymeren Komponenten aufbereitet oder aufgeschlossen werden. Die Aufbereitung oder der Aufschluss kann durch physikalische oder mechanische Verfahren, physikalisch-chemische Verfahren, wie Druckaufschluss, chemische Verfahren, wie das NaOH-Verfahren oder durch einen mikrobiellen Aufschluss erfolgen. Der Vorteil bei einem Aufschluss in einem Refiner liegt darin, dass ganze Faserpflanzen, insbesondere Bastfaserpflanzen, ohne vorherige Aufbereitung direkt nach der Ernte aufgeschlossen werden können, was Kosten einspart.

Das Verfahren zur Herstellung von Faserverbundstoffen mit einem Faserstoff, der mit einem Funktionszusatzstoff oder einer polymeren Matrix versehen wurde, sieht vor, dass der Faserstoff in einer thermoplastischen, duroplastischen oder elastomeren Polymermatrix eingebettet wird. Dabei ist vorgesehen, dass der mit einem Funktionszusatzstoff oder einem polymeren Matrixmaterial versehene Faserstoff unmittelbar nach dem Aufbringen dieser Komponenten mit einem Polymer zu einem Verbundwerkstoff weiterverarbeitet wird. Ebenfalls ist vorgesehen, dass der mit einem Funktionszusatzstoff oder polymeren Matrixmaterial versehene Faserstoff zu Fliesen oder Filzen verarbeitet oder in Fliesen oder Filzen eingearbeitet oder pelletiert wird. Das Pelletieren ist eine Möglichkeit zur thermoplastischen Weiterverarbeitbarkeit auch zum Teil langfaseriger Materialien.

Nachfolgend wird ein Ausführungsbeispiel der Erfindung näher erläutert, an dem die besonderen Vorteile der Verfahren verdeutlicht werden.

Für die dem Beispiel zugrundeliegenden Versuche wurden gehackte Hanfstengel mittels eines Refiners zu Faserstoffen aufgeschlossen. Bei dem Verfahren A wurde kein Haftvermittler zugegeben, bei dem Verfahren B wurde der Haftvermittler MAH-PP bei der Verbundaufbereitung der Matrix zugegeben, bei dem Verfahren C wurde der Haftvermittler durch das erfindungsgemäße . Verfahren appliziert. Für die Verfahren B und C wurden als Haftvermittler identische, mit Maleinsäureanhydrid gepfropfte Polypropylene (MAH-PP) verwendet, wobei bei dem erfindungsgemäßen Verfahren C das MAH-PP in wässriger Emulsion eingesetzt wurde.

Der Druckaufschluss erfolgte bei einem Druck von ca. 0,2 N/mm², für das Verfahren C wurde der Haftvermittler (maleinsäureanhydridgepfropftes PP-Copolymer) direkt nach dem Aufmahlen in die Blasleitung zwischen dem Refiner und einem Rohrtrockner eingedüst.

Die Faserstoffe für das Verfahren B wurden mit einem pulverförmigen Haftvermittler (MAH-PP) in einem Kaskadenmischer agglomeriert und anschließend zu Probenkörpern im Spritzguss verarbeitet. Die Faserstoffe gemäß der Verfahren A und C wurden in den gleichen Anlagen und mit identischem Polypropylen ohne Haftvermittler agglomeriert und ebenfalls zu Probekörpern spritzgegossen. In der Tabelle sind die mechanischen Eigenschaften eines Verbundwerkstoffes aus Hanffasern und Polypropylen in Abhängigkeit des Applikationsverfahrens des Haftvermittlers dargestellt.

Die relativen Kennwerte für die Zugfestigkeiten, Zug-E-Modul-Werte, Biegefestigkeiten und die Schlagzähigkeiten beziehen sich auf die Kennwerte des Verbundwerkstoffes nach dem Verfahren A ohne Haftvermittlerapplikation.

Im Verfahren B, bei dem die Fasern mit einem pulverförmigen Haftvermittler verarbeitet wurden, ist zu erkennen, dass die relative Zugfestigkeit in Abhängigkeit von dem Haftvermittleranteil zwischen 10% und 21 % ansteigt, der relative Zug-E-Modul zwischen 5 % und 10 % vergrößert wird, sich die relative Biegefestigkeit um 12 % bis 17 % erhöht, wohingegen sich die relative Schlagzähigkeit um 19 % bis 28 % erhöht, wobei sich die höchsten Werte jeweils bei der höchsten Prozentzahl an Haftvermittler ablesen lassen.

Beim Aufbringen eines Haftvermittlers mit dem erfindungsgemäßen Verfahren C, also bei dem Faserstoffe mit einer Geschwindigkeit von mehr als 20 m/s, vorzugsweise unter Druck, zusammen mit dem Haftvermittler transportiert werden, sind bei einem ähnlichen Haftvermittleranteil wesentlich höherer Werte für die relative Zugfestigkeit zu erkennen, nämlich Steigerungen von 30 % bis 52 %, der relative Zug-E-Modul ist um 11 % bis 28 % erhöht, die relative Biegefestigkeit erhöht sich um 15 % bis 21 % und die relative Schlagzähigkeit um 26 % bis 41 %.

Mit dem erfindungsgemäßen Verfahren ist es möglich, die aufbereiteten Faserstoffe direkt oder indirekt, z. B. nach einer Pelletierung oder Agglomeration, mit einem Polymer zu einem Verbundwerkstoff zu verarbeiten. Wie in der Tabelle gezeigt ist, wird durch das erfindungsgemäße Verfahren zum Aufbringen eines Haftvermittlers auf Fasern oder Faserstoffe eine Steigerung der mechanischen Eigenschaften faserverstärkter Verbundwerkstoffe erzielt. Auf eine Überdosierung der Haftvermittlermenge kann verzichtet werden, da der Haftvermittler unmittelbar im Interphasenbereich angesiedelt wird und dort gezielt reagieren kann, so dass der Haftvermittler nicht im Matrixwerkstoff, beispielsweise einem Polypropylen, ungenutzt untergeht.

**Tabelle**

| **Mechanische Eigenschaften eines Verbundwerkstoffes aus Hanffasern und PP in Abhängigkeit des Applikationsverfahrens eines Haftvermittlers** | | | | | |
|---|---|---|---|---|---|
| **Haftvermittler (HV)** | **HV [%]** | **relative Zugfestigkeit** | **relativer Zug-E-Modul** | **relative Biegefestigkeit** | **relative Schlagzähigkeit** |
| A ohne | 0 | 1,00 | 1,00 | 1,00 | 1,00 |
| B | 3,7 | 1,1 | 1,06 | 1,12 | 1,19 |
| | 6,1 | 1,13 | 1,05 | 1,12 | 1,21 |
| | 9,8 | 1,21 | 1,10 | 1,17 | 1,28 |
| C | 3,5 | 1,3 | 1,11 | 1,15 | 1,26 |
| | 6,4 | 1,42 | 1,24 | 1,21 | 1,35 |
| | 10,1 | 1,52 | 1,28 | 1,28 | 1,41 |

## Patentansprüche

1. Verfahren zum Aufbringen eines Funktionszusatzstoffes oder eines Teils eines polymeren Matrixmaterials auf einem Faserstoff, insbesondere bei der Herstellung von Faserverbundwerkstoffen mit einer thermoplastischen oder duroplastischen Matrix, wobei der Faserstoff zusammen mit dem Funktionszusatzstoff und/oder eines Teils des polymeren Matrixmaterials in einer Blasleitung mit einer Geschwindigkeit von mehr als 20 m/s unter einem Druck oberhalb des Umgebungsdruckes transportiert wird.

2. Verfahren nach Anspruch 1, **dadurch gekennzeichnet, dass** der Funktionszusatzstoff und/oder der Teil des polymeren Matrixmaterials separat in die Rohrleitung eingeleitet wird.

3. Verfahren nach einem der Ansprüche 1 oder 2, **dadurch gekennzeichnet, dass** in der Rohrleitung eine Temperatur oberhalb der Umgebungstemperatur herrscht.

4. Verfahren nach einem der voranstehenden Ansprüche, **dadurch gekennzeichnet, dass** die Faserstoffe aus einem Refiner, insbesondere unmittelbar aus dem Refiner in die Rohrleitung geleitet werden.

5. Verfahren nach einem der voranstehenden Ansprüche, **dadurch gekennzeichnet, dass** in der Rohrleitung eine Dampfatmosphäre herrscht.

6. Verfahren nach einem der voranstehenden Ansprüche, **dadurch gekennzeichnet, dass** der Funktionszusatzstoff und/oder der Teil des polymeren Matrixmaterials in einem Refiner dem Faserstoff zugegeben werden.

7. Verfahren nach Anspruch 6, **dadurch gekennzeichnet, dass** der Funktionszusatzstoff und/oder der Teil des polymeren Matrixmaterials dem Faserstoff im Refiner unter Druck zugegeben wird.

8. Verfahren nach einem der voranstehenden Ansprüche, **dadurch gekennzeichnet, dass** der Funktionszusatzstoff und/oder der Teil des polymeren Matrixmaterials in einem wässrigen Medium aufgebracht wird.

9. Verfahren nach einem der voranstehenden Ansprüche, **dadurch gekennzeichnet, dass** als Funktionszusatzstoff ein Haftvermittler auf polymerer Basis mit mindestens einer reaktiven Gruppe zur chemischen oder physikalischen Bindung an den Faserstoff verwendet wird.

10. Verfahren nach einem der voranstehenden Ansprüche, **dadurch gekennzeichnet, dass** der Faserstoff aus einem lignocellulosehaltigen Faserstoff besteht.

11. Verfahren nach einem der voranstehenden Ansprüche, **dadurch gekennzeichnet, dass** es sich bei dem Funktionszusatzstoff um Antioxidantien, Lichtschutzmittel, Thermostabilisatoren, Flammschutzmittel, Gleitmittel, Schlagzähigkeitsverbesserer, Flexibilisatoren, Farbmittel wie Pigmente oder Farbstoffe, Biostabilisatoren wie pilz- und mikrobentötende Zusatzstoffe, Fungizide, antibakterielle Mittel, Treibmittel, Nukleierungsmittel, Weichmacher, Vernetzungsmittel, Fließhilfsmittel und/oder Haftvermittler handelt.

12. Verfahren nach einem der voranstehenden Ansprüche, **dadurch gekennzeichnet, dass** es sich bei dem verwendeten polymeren Matrixmaterial um PP, PE, PVC, PS, ABS oder PA oder einen anderen thermoplastischen Werkstoff oder um einen duroplastischen oder elastomeren Polymerwerkstoff handelt.

13. Verfahren nach einem der voranstehenden Ansprüche, **dadurch gekennzeichnet, dass** es sich bei dem verwendeten polymeren Matrixmaterial um Polymere aus nachwachsenden Rohstoffen handelt, z.B. aus Stärke oder Stärkederivate, Cellulosederivate, Polyactide oder Polyhydroxyfettsäuren.

14. Verfahren zur Herstellung von Faserverbundstoffen mit einem Faserstoff, der nach einem der voranstehenden Ansprüche mit einem Funktionszusatzstoff und/oder einem Teil eines polymeren Matrixmaterials versehen wurde, **dadurch gekennzeichnet, dass** der Faserstoff in einer thermoplastischen, duroplastischen oder elastomeren Polymermatrix eingebettet wird.

15. Verfahren nach Anspruch 14, **dadurch gekennzeichnet, dass** der mit einem Funktionszusatzstoff und/oder einem Teils des polymeren Matrixmaterials versehene Faserstoff unmittelbar nach dem Aufbringen des Funktionszusatzstoffes und/oder eines Teils des polymeren Matrixmaterials mit einem Polymerwerkstoff zu einem Verbundwerkstoff verarbeitet wird.

16. Verfahren nach einem der voranstehenden Ansprüche, **dadurch gekennzeichnet, dass** zur Bereitstellung des Faserstoffes vor dem Aufbringen des Funktionszusatzstoffes und/oder eines Teils des polymeren Matrixmaterials eine komplette Faserpflanze oder ein Großteil einer Faserpflanze mit oder ohne Wurzelwerk aufgeschlossen wird.

17. Verfahren nach einem der voranstehenden Ansprüche, **dadurch gekennzeichnet, dass** der mit einem Funktionszusatzstoff und/oder dem Teil des polymeren Matrixmaterials versehene Faserstoff zu oder in Vliesen oder Filzen verarbeitet oder eingearbeitet oder pelletiert wird.

## Claims

1. Process for the application of a functional additive or of a portion of a polymeric matrix material to a fibrous material, in particular, during the production of fibre composite materials with a thermoplastic or thermoset matrix, where the fibrous material, together with the functional additive and/or a portion of the polymeric matrix material, is transported at a velocity of more than 20 m/s under a pressure above the ambient pressure in a blowing line.

2. Process according to Claim 1, **characterized in that** the functional additive and/or the portion of the polymeric matrix material is introduced separately into the pipeline.

3. Process according to any of Claims 1 or 2, **characterized in that** a temperature above the ambient temperature prevails in the pipeline.

4. Process according to any of the preceding claims, **characterized in that** the fibrous materials are passed into the pipeline from a refiner, in particular directly from the refiner.

5. Process according to any of the preceding claims, **characterized in that** a steam atmosphere prevails in the pipeline.

6. Process according to any of the preceding claims, **characterized in that** the functional additive and/or the portion of the polymeric matrix material are added in a refiner to the fibrous material.

7. Process according to Claim 6, **characterized in that** the functional additive and/or the portion of the polymeric matrix material is added under pressure in the refiner to the fibrous material.

8. Process according to any of the preceding claims, **characterized in that** the functional additive and/or the portion of the polymeric matrix material is applied in an aqueous medium.

9. Process according to any of the preceding claims, **characterized in that** the functional additive used comprises a polymer-based adhesion promoter having at least one reactive group for chemical or physical binding to the fibrous material.

10. Process according to any of the preceding claims, **characterized in that** the fibrous material is composed of a lignocellulose-containing fibrous material.

11. Process according to any of the preceding claims, **characterized in that** the functional additive involves antioxidants, light stabilizers, heat stabilizers, flame retardants, lubricants, impact modifiers, flexibilizers, colorants such as pigments or dyes, biostabilizers such as fungicidal additives and microbicidal additives, fungicides, antibacterial agents, blowing agents, nucleating agents, plasticizers, crosslinking agents, flow aids and/or adhesion promoters.

12. Process according to any of the preceding claims, **characterized in that** the polymeric matrix material used involves PP, PE, PVC, PS, ABS or PA or another thermoplastic material or involves a thermoset or elastomeric polymer material.

13. Process according to any of the preceding claims, **characterized in that** the polymeric matrix material used involves polymers from renewable raw materials, e.g. from starch or starch derivatives, cellulose derivatives, polylactides or polyhydroxy fatty acids.

14. Process for the production of fibre composite materials with a fibrous material which has been provided, according to any of the preceding claims, with a functional additive and/or with a portion of a polymeric matrix material, **characterized in that** the fibrous material is embedded within a thermoplastic, thermoset or elastomeric polymer matrix.

15. Process according to Claim 14, **characterized in that** the fibrous material provided with a functional additive and/or with a portion of the polymeric matrix material is processed, immediately after the application of the functional additive and/or of a portion of the polymeric matrix material, with a polymer material, to give a composite material.

16. Process according to any of the preceding claims, **characterized in that**, for provision of the fibrous material, prior to the application of the functional additive and/or of a portion of the polymeric matrix material, a complete fibrous plant or a major part of a fibrous plant is destructured, with or without root system.

17. Process according to any of the preceding claims, **characterized in that** the fibrous material provided with a functional additive and/or with the portion of the polymeric matrix material is processed to give, or incorporated within, non-wovens or felts, or is pelletized.

## Revendications

1. Procédé pour appliquer sur une matière fibreuse un additif fonctionnel ou une partie d'un matériau matriciel polymère, en particulier dans la réalisation de matériaux composites renforcés de fibres, à matrice thermoplastique ou duroplastique, dans lequel on achemine la matière fibreuse conjointement avec l'additif fonctionnel et/ou une partie du matériau matriciel polymère dans une conduite de soufflage, à une vitesse supérieure à 20 m/s, sous une pression supérieure à la pression ambiante.

2. Procédé selon la revendication 1, **caractérisé en ce qu'**on introduit séparément dans la conduite tubulaire l'additif fonctionnel et/ou la partie du matériau matriciel polymère.

3. Procédé selon l'une des revendications 1 ou 2, **caractérisé en ce qu'**il règne dans la conduite tubulaire une température supérieure à la température ambiante.

4. Procédé selon l'une des revendications précédentes, **caractérisé en ce qu'**on achemine les matières fibreuses depuis une défibreuse, en particulier directement depuis la défibreuse jusqu'à la conduite tubulaire.

5. Procédé selon l'une des revendications précédentes, **caractérisé en ce qu'**il règne dans la conduite tubulaire une atmosphère de vapeur.

6. Procédé selon l'une des revendications précédentes, **caractérisé en ce qu'**on ajoute à la matière fibreuse, dans une défibreuse, l'additif fonctionnel et/ou la partie du matériau matriciel polymère.

7. Procédé selon la revendication 6, **caractérisé en ce que** l'on ajoute sous pression à la matière fibreuse l'additif fonctionnel et/ou la partie du matériau matriciel polymère dans la défibreuse.

8. Procédé selon l'une des revendications précédentes, **caractérisé en ce que** l'on applique l'additif fonctionnel et/ou la partie du matériau matriciel polymère, dans un milieu aqueux.

9. Procédé selon l'une des revendications précédentes, **caractérisé en ce qu'**on utilise comme additif fonctionnel un promoteur d'adhérence à base polymère comprenant au moins un groupe réactionnel pour la liaison chimique ou physique à la matière fibreuse.

10. Procédé selon l'une des revendications précédentes, **caractérisé en ce que** la matière fibreuse consiste en une matière fibreuse contenant de la lignocellulose.

11. Procédé selon l'une des revendications précédentes, **caractérisé en ce qu'**il s'agit dans l'additif fonctionnel d'antioxydants, de stabilisants contre l'effet de la lumière, de stabilisateurs thermiques, d'agents ignifuges, d'agents lubrifiants, d'améliorateurs de la résistance aux chocs, de flexibilisateurs, de colorants tels que des pigments ou de la matière colorante, de biostabilisateurs tels que des additifs pour tuer les champignons et les microbes, de fongicides, d'agents antibactériens, d'agents propulseurs, d'agents de nucléation, d'adoucissants, d'agents de réticulation, d'agents contribuant à la fluidité, et/ou de promoteurs d'adhérence.

12. Procédé selon, l'une des revendications précédentes, **caractérisé en ce qu'**il s'agit dans le matériau matriciel polymère utilisé de PP, PE, PVC, PS, ABS ou PA, ou un autre matériau thermoplastique, ou d'un matériau polymère duroplastique ou élastomère.

13. Procédé selon l'une des revendications précédentes, **caractérisé en ce qu'**il s'agit, dans le matériau matriciel polymère utilisé, de polymères issus de matières premières renouvelables, par exemple issus d'amidon ou de dérivés de l'amidon, de dérivés de la cellulose, de polyactide ou d'acides gras polyhydroxy.

14. Procédé pour fabriquer un matériau composite renforcé de fibres au moyen d'une matière fibreuse, laquelle est assortie, selon l'une des revendications précédentes, d'un additif fonctionnel et/ou d'une partie d'un matériau matriciel polymère, **caractérisé en ce qu'**on enrobe la matière fibreuse dans une matrice polymère thermoplastique, duroplastique ou élastomère.

15. Procédé selon la revendication 14, **caractérisé en ce que** directement après l'application de l'additif fonctionnel et/ou d'une partie du matériau matriciel polymère, l'on transforme la matière fibreuse assortie d'un additif fonctionnel et/ou d'une partie d'un matériau matriciel polymère en un matériau composite avec une matière polymère.

16. Procédé selon l'une des revendications précédentes, **caractérisé en ce que** pour la préparation de la matière fibreuse avant l'application de l'additif fonctionnel et/ou d'une partie d'un matériau matriciel polymère, on désagrège une plante textile complète ou une grande partie d'une plante textile, avec ou sans les racines.

17. Procédé selon l'une des revendications précédentes, **caractérisé en ce que** l'on transforme, on forme, ou on agglomère en boulettes, la matière fibreuse assortie d'un additif fonctionnel et/ou d'une partie d'un matériau matriciel polymère, en non-tissés ou en feutres.
